# EUROPEAN PATENT SPECIFICATION

(11) **EP 0 402 021 B1**
(45) Date of publication and mention of the grant of the patent: **25.08.1993**
(21) Application number: 90305741.2
(22) Date of filing: 25.05.1990
(51) Int. Cl.: B60C 11/00

(54) **Low noise tyre**
Geräuschlose Luftreifen
Bandage pneumatique à faible bruit

(30) Priority: 06.06.1989 JP 143794/89
(43) Date of publication of application: 12.12.1990
(73) Proprietor: SUMITOMO RUBBER INDUSTRIES LIMITED, Kobe-shi Hyogo-ken (JP)
(72) Inventor: Kakumu, Kiichiro, Kobe-shi, Hyogo-ken (JP)
(74) Representative: Stewart, Charles Geoffrey

(56) References cited:
- EP-A- 0 093 072
- EP-A- 0 268 436
- WO-A-80/00233
- PATENT ABSTRACTS OF JAPAN, vol. 14, no. 121 (M-946)[4064], 7th March 1990; & JP-A-1 317 808 (YOKOHAMA RUBBER CO., LTD) 22-12-1989

## Description

The present invention relates to a low noise tyre in which pattern noise caused by axial grooves is reduced.

From the point of view of environmental pollution as well as ride comfort, automobile noise especially in high-speed running is a problem to be solved.

The main part of the automobile noise is tyre noise, and the main part of tyre noise is pattern noise. Such pattern noise is generated by the following mechanism.

The tread groove volume, specifically the axial groove volume, during running undergoes significant periodical change when the groove enters and leaves the ground contacting area which vibrates the air in the groove and thus generates a pressure wave which is heard as noise.

Generally, there is a significant peak in the sound energy spectrum around the frequencies determined by the circumferential pitches of the tread pattern and the tyre rotating speed, and when the peak value is large, it makes the generated sound very noisy.

Therefore, to lower the pattern noise, methods such as the so called variable pitching have been proposed, e.g. in EP-A-0 268 436 which corresponds to the preamble of claim 2.

In variable pitching methods, in order to lower the absolute value of the peak, several different pitches are arranged in the circumferential direction of the tyre in a special manner to disturb synchronism of the noise pulses generated from the tread pattern and thereby to disperse the noise sound energy into a wide frequency range.

However, the optimum pitching to minimise noise often leads to a deterioration of other aspects of tyre performance. For example, tread elements with different pitches have different rigidities, which is liable to cause uneven tread wear thereby reducing wear life, and unfavourably affecting vibration characteristics such as radial force variation (RFV) and radial run out (RRO).

The object of the present invention is therefore to provide a low noise tyre in which the noise characteristic is improved without sacrificing other tyre characteristics.

According to the present invention a low noise tyre having a tread provided with axial grooves arranged at regular pitches in the circumferential direction of the tyre characterised by the circumferential length of the ground contacting region of the tread when the tyre is mounted on a regular rim and inflated to its normal internal pressure and loaded with its normal load, is substantially equal to the pitch multiplied by an integer.

According to another aspect of the present invention, a low noise tyre has a tread provided with a tread pattern comprising axial grooves arranged at irregular pitches in the circumferential direction of the tyre, wherein the circumferential length of the ground contacting region of the tyre when the tyre is mounted on a regular rim and inflated to a normal internal pressure and loaded with a normal load, is substantially equal to an integral multiple of the mean pitch length of the above-mentioned irregular pitches.

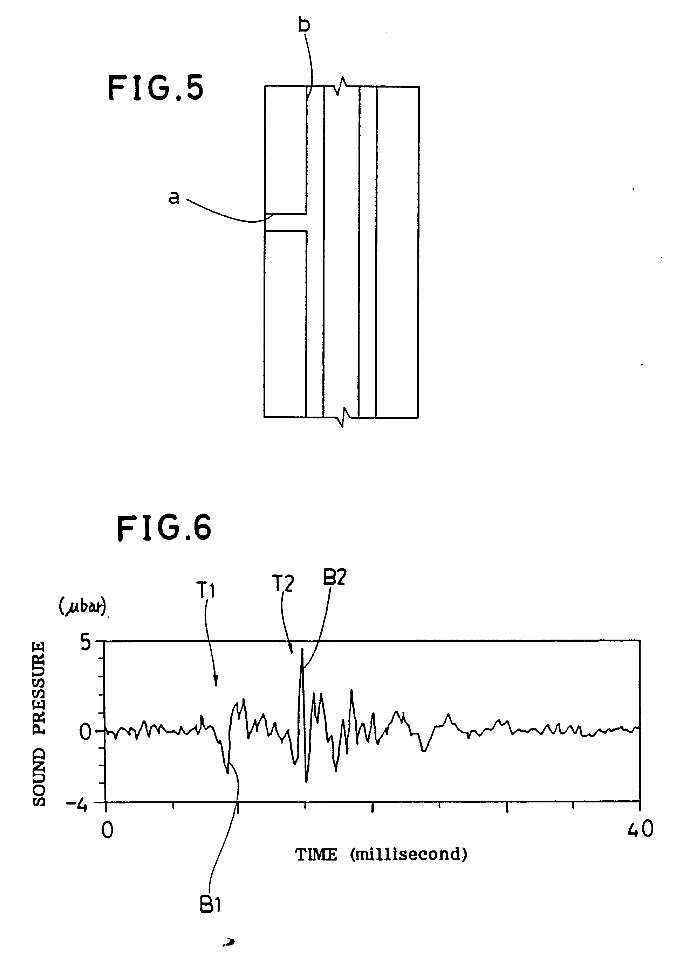

The inventor studied the mechanism of generating noise, using a test tread pattern as shown in Fig.5. The test pattern comprised two parallel straight circumferential grooves and one axial groove (a) extending parallel to the axial direction of the tyre from one circumferential groove (b) to the tread edge. Fig.6 shows the waveform of the sound pressure generated from the axial groove (a). From the waveform it can be seen that the axial groove generates significant pulses B1 and B2 at the time T1 when the groove contacts the ground and the time T2 when the groove leaves the ground, respectively, and the pulse B1 and the pulse B2 are opposite in sound pressure. This fact is explained by the air flow out from the groove as it decreases in volume when contacting the ground (T1) and conversely by the air flow into the groove as it increases in volume when leaving the ground (T2).

In the present invention, the pitches of the circumferentially spaced axial grooves are set in such a way that the contacting with the ground of one groove of the tyre and the leaving the ground of another groove occur at the same time so as to generate opposite pulses which cancel each other.

Some embodiments of the present invention will now be described in detail with reference to the drawings, in which:-
Fig.1. is a developed plan view showing a tread pattern of an embodiment of the present invention
Fig.2. is a schematic side view of the tyre in a ground contacting state
Figs.3a and 3b are schematic plan views each showing another embodiment of the present invention
Fig.4 is a diagram showing a relationship between the ground contacting length divided by groove pitch and noise level in decibel;
Fig.5 is a plan view showing a tread pattern used in an examination, and
Fig.6 is a graph showing the waveform of the measured sound pressure thereof.

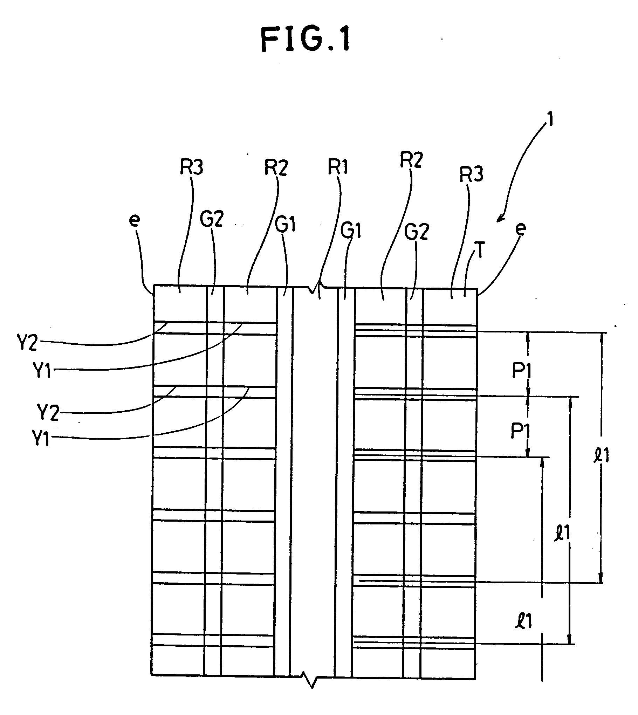

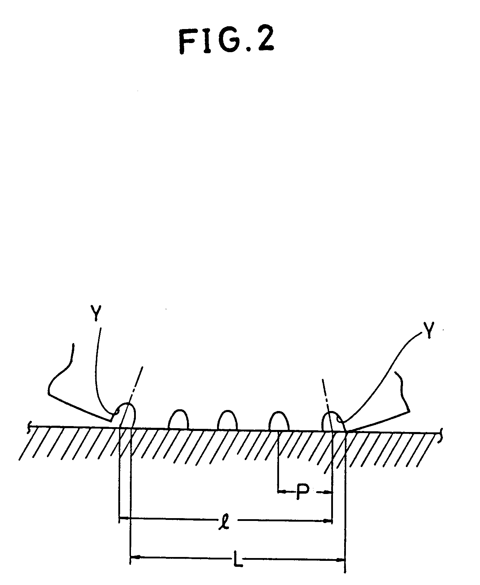

In Figs. 1 and 2 the low noise tyre 1 is a pneumatic passenger car tyre. The tyre 1 has a tread portion T provided with four circumferentially continuously extending grooves G1, G2 thereby dividing the tread portion into a centre rib R1 extending along the tyre equator, two intermediate ribs R2 located one on each side thereof, and two shoulder ribs R3 extending along the tread edges.

In Figs.1 and 2, the circumferential grooves G1, G2 are straight grooves, but zigzag grooves or wavy grooves may be used as the circumferential grooves independently or in appropriate combination.

The tread portion T is further provided with circumferentially spaced axial grooves Y1, Y2.

The axial grooves Y1, Y2 extend axially outwardly from the axially inner circumferential grooves G1 to the tread edges traversing the axially outer circumferential grooves G2, thereby dividing the intermediate ribs R2 and the shoulder ribs R3 into circumferentially separated blocks.

Thus the axial grooves Y in this embodiment include inner axial grooves Y1 extending from the inner circumferential groove G1 to the outer circumferential groove G2, and outer axial grooves Y2 extending from the outer circumferential groove G2 to the tread edge (e) to open its outer end at the side of the tyre.

Further, the axial grooves Y1, Y2 in this embodiment are formed in a straight configuration parallel to the axial direction of the tyre, that is, at the right angle to the circumferential grooves, but they may also be formed with an appropriate bias angle to the axial direction of the tyre.

Further, in this embodiment, the axial grooves Y1, Y2 are arranged at regular intervals (pitches) in the circumferential direction of the tyre, and the pitches are set so that the ground contacting length L of the tyre under a standard condition is substantially equal to a length l which is the groove pitch P multiplied by an integer when the above-mentioned standard condition is that when the tyre is mounted on a regular rim, and inflated to its normal internal pressure and loaded with its normal load.

Preferably, the above-mentioned integer N is selected from the integers 3, 4, 5 and 6.

When N is smaller than 3, the number of axial grooves becomes insufficient to maintain the wet-grip property of the tyre. On the other hand, when N is more than 6, the number or grooves becomes excessive so that the rigidity of the tread decreases and thus the running performance deteriorates. Furthermore the increase in the number or grooves increases the number of generated pulses, and thereby increases pattern noise as a whole.

The above-mentioned ground contacting length L is generally defined as the circumferential length of the ground contact region of the tread portion of the tyre measured on the tyre equator under the above-mentioned standard condition.

In practice the front and rear edges of the ground contacting region are curved to a greater or lesser degree. Accordingly, the circumferential length between the front and rear edges at the axial position of the concerned axial grooves is preferably used as the above-mentioned ground contacting length L.

Furthermore, the actual ground contacting length will vary under actual service conditions.

Therefore, the above-mentioned integral-multiple pitch length l may have a range which is from 0.97 to 1.03 times the ground contacting length L.

As explained above, in this embodiment, the outer axial groove Y2 and the inner axial groove Y1 are formed at an equal pitch and in the same phase.

That is, the pitches P1 of the inner axial grooves Y1 are set to be the same as the pitches P2 of the outer axial grooves Y2, and the axially adjacent inner and outer groove Y1 and Y2 are aligned on a straight line.

However, from the foregoing, it will be understood that it is only necessary to set the integral multiple pitch length l (l1, l2) substantially the same as the ground contacting length in each of the rib R2 and R3 (which means the axial location of the axial grooves).

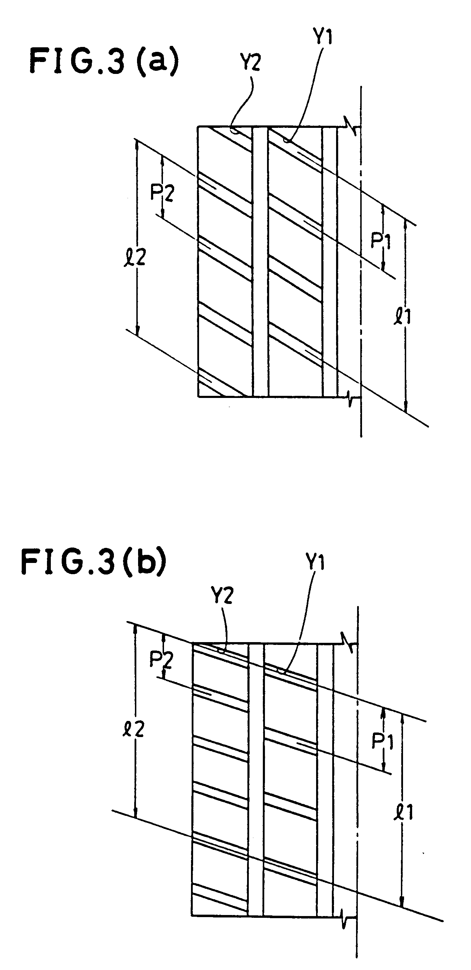

Figs.3a and 3b each show another embodiment of the present invention, wherein the axial grooves are arranged at regular intervals (pitches).

In Fig. 3a, the tread portion is provided with four straight circumferential grooves similarly to the foregoing embodiment, but the axial groove Y1 and Y2 are inclined with respect to the tyre axial direction. Further, between the inner axial groove Y1 and the outer axial grooves Y2, the pitch P1 and the integral multiple pitch length l1 are the same as the pitch and the integral multiple pitch length l2, but their circumferential locations differ from each other, that is, their phases are shifted.

In Fig. 3b the tread pattern is similar to that of Fig 3a except that the pitch P1 of the inner axial groove Y1 differs from the pitch P2 of the outer axial grooves Y2.

The value of the integer N in the axially outer rib is 4, and the value of the integer N in the axially inner rib is 3.

Furthermore, the present invention can be combined with variable pitching methods. In this case, the mean value of the varied pitches, or the circumference divided by the number of the axial grooves is treated as the pitch length of the axial grooves. This will apply very well in such a case that there is no periodicity in a block arrangement in the circumferential direction of the tyre. Further, in some case where there is any periodicity in a block arrangement, the axial grooves may be arranged such that each of the axial grooves has a paired axial groove spaced apart therefrom by a distance substantially the same as the ground contacting length.

In order to demonstrate the invention radial tyres of size 195/60R14 were made for comparison tests. All the tyres have an identical tread pattern as shown in Fig.1. except for the axial groove pitches.

Each test tyre was mounted on a regular rim of size 5½Jx14 and inflated to a normal pressure of 2.0 kgf/cm², and the circumference thereof under this condition was 1855 mm. The ground contacting length L thereof under a normal load was 132.5 mm.

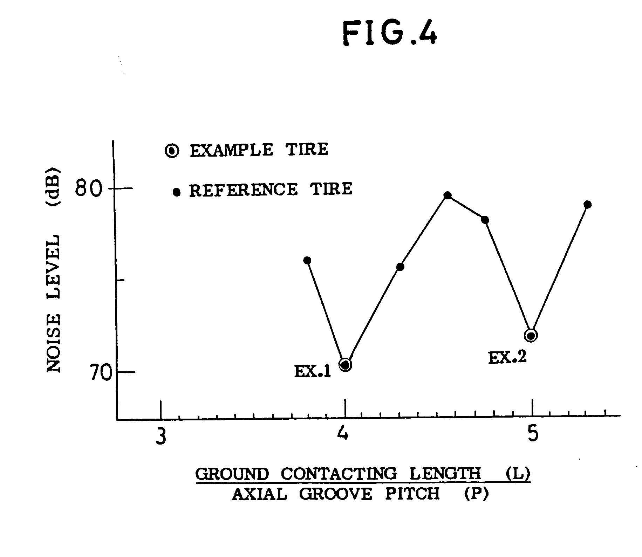

The sound pressure level of the test tyres was measured. The measurement was performed according to the tyre noise testing method specified by JASO-C606, wherein the microphone position is laterally 1 m from the tyre equator and vertically 25 cm from the ground contacting face of the tread on the immediate side of the tyre. The results of the measurements are shown in Fig.4.

As shown in Fig.4 the sound pressure level was significantly lowered in the example tyres 1 and 2 according to the invention as compared with the reference tyres.

As described above, in a low noise tyre of the present invention, the circumferential pitch of the axial grooves multiplied by an integer is set substantially equal to the ground contacting length of the tyre. Therefore, the sound pressure wave generated from the axial groove coming to contact the ground and that generated from the axial ground being released from the ground cancel each other to reduce the pattern noise.

## Claims

1. A low noise tyre having a tread (T) provided with axial grooves (Y1, Y2) arranged at regular pitches (P) in the circumferential direction of the tyre, characterised in that the circumferential length (L) of the ground contacting region of the tread (T), when the tyre is mounted on a regular rim and inflated to its normal internal pressure and loaded with its normal load, is substantially equal to the pitch (P) multiplied by an integer.

2. A low noise tyre having a tread (T) provided with axial grooves (Y1, Y2) arranged at irregular pitches (P1, P2) in the circumferential direction of the tyre, characterised in that the circumferential length (L) of the ground contacting region of said tread (T), when the tyre is mounted on a regular rim and inflated to at normal internal pressure and loaded with normal load, is substantially equal to the mean pitch length of said irregular pitches (P1, P2) multiplied by an integer.

3. A low noise tyre having a tread (T) provided with axial grooves (Y1, Y2) spaced apart from each other in the circumferential direction of the tyre, characterised by said axial grooves (Y1, Y2) each having a paired axial groove spaced apart therefrom by a distance substantially the same as the circumferential length of the ground contacting region of said tread when the tyre is mounted on a regular rim and inflated to normal internal pressure and loaded with its normal load.

4. A low noise tyre according to claim 1 or 2, characterised in that said integer has a value of 3, 4, 5 or 6.

## Patentansprüche

1. Geräuscharmer Reifen mit einem Laufstreifen (T), der mit Axialnuten (Y1, Y2) versehen ist, welche mit regelmäßigen Wiederholabständen (P) in Umfangsrichtung des Reifens angeordnet sind, dadurch gekennzeichnet, daß die Umfangslänge (L) des Bodenkontakt-Bereichs des Laufstreifens (T), wenn der Reifen an einer regulären Felge angebracht und auf seinen normalen Innendruck aufgepumpt und mit seiner Normallast belastet ist, im wesentlichen gleich dem mit einer ganzen Zahl multiplizierten Wiederholabstand (P) ist.

2. Geräuscharmer Reifen mit einem Laufstreifen (T), der mit Axialnuten (Y1, Y2) versehen ist, die mit irregulären Wiederholabständen (P1, P2) in Umfangsrichtung des Reifens angeordnet sind, dadurch gekennzeichnet, daß die Umfangslänge des Bodenkontakt-Bereichs des Laufstreifens (T), wenn der Reifen an einer regulären Felge angebracht und auf seinen normalen Innendruck aufgepumpt und mit seiner normalen Last belastet ist, im wesentlichen gleich der mittleren Wiederhollänge der mit einer ganzen Zahl multiplizierten irregulären Wiederholabstände (P1, P2) ist.

3. Geräuscharmer Reifen mit einem Laufstreifen (T), der mit Axialnuten (Y1, Y2) versehen sind, die voneinander in Umfangsrichtung des Reifens Abstand haben, dadurch gekennzeichnet, daß jede Axialnut (Y1, Y2) jeweils eine dazu paarige Axialnut besitzt, die von ihr einen Abstand hat, der im wesentlichen gleich der Umfangslänge des Bodenberührungs-Bereiches des Laufstreifens ist, wenn der Reifen an einer regulären Felge angebracht und auf den normalen Innendruck aufgepumpt und mit seiner normalen Last belastet ist.

4. Geräuscharmer Reifen nach Anspruch 1 oder 2, dadurch gekennzeichnet, daß die ganze Zahl einen Wert von 3, 4, 5 oder 6 hat.

## Revendications

1. Pneumatique à faible bruit, ayant une bande de roulement (T) qui comporte des gorges axiales (Y1, Y2) placées avec des pas réguliers (P) dans la direction circonférentielle du pneumatique, caractérisé en ce que la longueur circonférentielle (L) de la région de contact avec le sol de la bande de roulement (T), lorsque le pneumatique est monté sur une jante normale, gonflé à sa pression interne normale et chargé par sa charge normale, est pratiquement égale au pas (P) multiplié par un nombre entier.

2. Pneumatique à faible bruit, ayant une bande de roulement (T) qui comporte des gorges axiales (Y1, Y2) disposées avec des pas irréguliers (P1, P2) dans la direction circonférentielle du pneumatique, caractérisé en ce que la longueur circonférentielle (L) de la région de contact avec le sol de la bande de roulement (T), lorsque le pneumatique est monté sur une jante normale, gonflé à sa pression interne normale et soumis à sa charge normale, est pratiquement égale à la longueur du pas moyen des pas irréguliers (P1, P2) multiplié par un nombre entier.

3. Pneumatique à faible bruit, ayant une bande de roulement (T) qui comporte des gorges axiales (Y1, Y2) séparées mutuellement dans la direction circonférentielle du pneumatique, caractérisé en ce que les gorges axiales (Y1, Y2) ont chacune une gorge axiale appariée séparée par une distance pratiquement égale à la longueur circonférentielle de la région de contact avec le sol de la bande de roulement lorsque le pneumatique est monté sur une jante normale, est gonflé à sa pression interne normale et est soumis à sa charge normale.

4. Pneumatique à faible bruit selon la revendication 1 ou 2, caractérisé en ce que le nombre entier a une valeur égale à 3, 4, 5 ou 6.
